(19)

**Europäisches Patentamt**

**European Patent Office**

**Office européen des brevets**

(11) **EP 1 549 083 A2**

(12) **EUROPEAN PATENT APPLICATION**

(43) Date of publication:
29.06.2005 Bulletin 2005/26

(51) Int Cl.⁷: **H04N 9/74**

(21) Application number: **04106755.4**

(22) Date of filing: **20.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **19.12.2003 EP 03293277**
**13.04.2004 US 823183**

(71) Applicants:
• **TEXAS INSTRUMENTS INCORPORATED**
**Dallas Texas 75265 (US)**
Designated Contracting States:
**DE GB**
• **Texas Instruments France**
**06271 Villeneuve Loubet Cedex, Nice (FR)**
Designated Contracting States:
**FR**

(72) Inventor: **Lafon, Phillippe**
**06800 Cagnes sur Mer (FR)**

(74) Representative: **Holt, Michael et al**
**Texas Instruments Ltd.,**
**PO Box 5069**
**Northampton, Northamptonshire NN4 7ZE (GB)**

(54) **Method and related system for overlaying a graphics object on a digital picture**

(57)     A processor-based method, and related system, directed to overlaying or combining a digital graphics object and a digital picture (700 - 720) while both the digital graphics object and the digital picture are in compressed format.

FIG. 7

**Description**

Field of the Invention

Embodiments of the present invention are directed to methods of overlaying graphics object on digital pictures, and in particular overlaying with both the graphics object and digital picture in compressed format.

Description of the Related Art

A digital picture, whether a single picture or a picture in a series of pictures forming a video, are comprised of pixels. In some formats, each pixel may comprise a value for each of the primary colors red, green and blue, also known as RGB format. In a other formats, each pixel may comprise a luminance value (which may be likened to a black and white value of the pixel) and two chrominance values (which together define the color of the pixel). The luminance/chrominance format may be referred to as "Y,Cb,Cr" format (with Y representing the luminance value and the Cb,Cr representing the chrominance values), or "YUV" format.

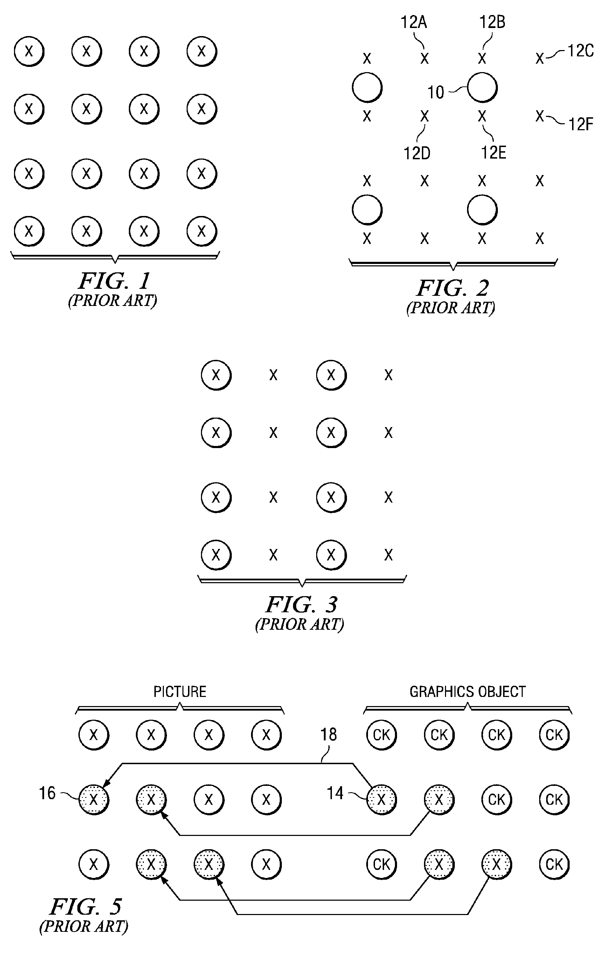

Figure 1 illustrates a 4 pixel by 4 pixel portion of a digital picture. In Figure 1, the "X" locations indicate a luminance value, and the circles (which in Figure 1 are coextensive with the "X" locations) represent the combined chrominance values associated with each luminance value. Digital pictures with coextensive luminance and chrominance values as illustrated in Figure 1 are said to reside in "4:4:4" space. While 4:4:4 space may provide the best resolution for displaying a digital picture, the amount of memory required to store the picture, and therefore the amount of bandwidth required to transfer the picture, may be quite large. Consider, for example, a picture taken with a digital camera having a charge couple device (CCD) array of 1 million pixels (1 mega-pixel). If each pixel comprises a luminance and two chrominance values of one byte (8 bits) of data each, then a single picture may require as much as three megabytes of storage space.

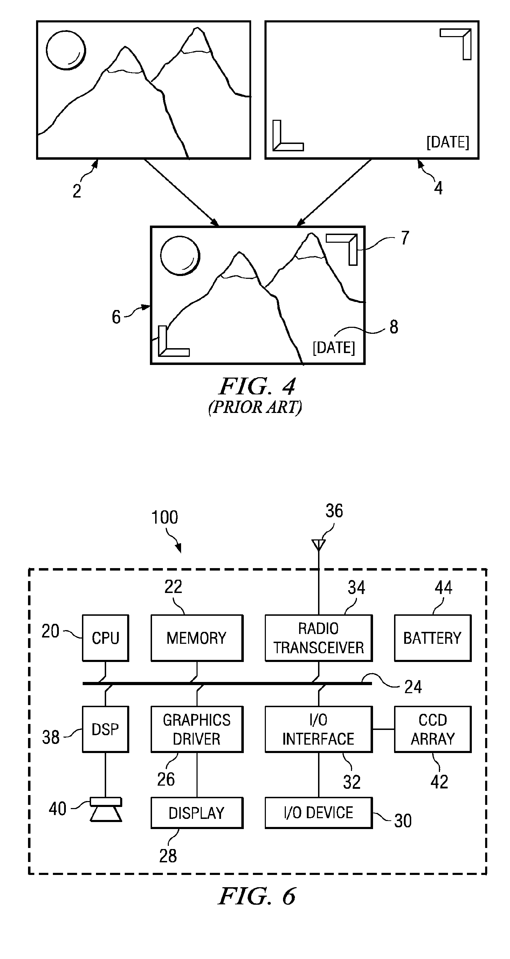

In order to reduce the amount of storage required for digital pictures, some digital systems store pictures in a compressed format where the number of a picture's chrominance values is reduced, relying on the fact that the human eye perceives sharpness mainly in black and white (Y) component. In such systems, the chrominance values may not necessarily align with luminance values. Figure 2 illustrates an exemplary 4 pixel by 4 pixel portion of a digital picture where the luminance values are retained, but 12 of the 16 chrominance values are removed. The system illustrated in Fig ure 2 may be referred to as "4:2:0" space. The circles representing the chrominance values in Figure 2 do not imply additional pixels; rather, the chrominance values are placed between the luminance "X's" to represent that the chrominance values apply to the luminance values in close proximity. For example, the chrominance values represented by circle 10, when converted back to 4:4:4 space for display on an electronic device, may be applied to each of the surrounding luminance values 12A -F as a good approximation of the original picture.

Another compressed format of Y,Cb,Cr space may be a "4:2:2"space, as illustrated in Figure 3. When converting an image in 4:2:2 space to a 4:4:4 space for display on an electronic device, missing chrominance values may b e simply copied from one of the closest, and still present, chrominance values, or the chrominance values may be calculated by combining a plurality of chrominance values in close proximity. While compressed or down - sampled 4: 2:2 and 4:2:0 spaces may redu ce the amount of storage needed for each picture or stream of pictures, storage of digital pictures in this manner conflicts with features that many consumers utilize in their digital still photography and digital movie endeavors.

Home computers, personal digital assistants and wireless devices such as telephones increasingly have the ability to display digital pictures, and sometimes to manipulate the digital pictures in various ways. One such manipulation may be overlaying of graphics objects (e.g., borders, titles and dates) over the digital pictures. Figure 4 illustrates overlaying. In particular, a digital picture 2 and an overlay 4 may be provided to, or acquired by, a processor -based device. The processor-based device may overlay or combine the d igital picture 2 and the overlay 4 to create a composite image 6 comprising most of the features of the digital picture 2, but also certain additional features such as borders 7 and a date 8 of the overlay 4. Overlaying of the related art is accomplished on a pixel-by-pixel basis. When a graphics object pixel has a value indicating transparency, the pixel in the original picture is left unchanged. When a pixel in the graphics object has a value indicating non-transparency, the pixel in the original picture is replaced by the pixel from the graphics object.

Figure 5 illustrates a pixel-level overlay procedure of the related art. In Figure 5, pixels noted as "CK" contain a value set at a pre-defined "color-key" value, indicating that they should not be transferred to the picture. Each pixel in a graphics object is analyzed to determine whether it contains the value of the color-key. If so, the corresponding pixel in the picture remains unchanged. However, if a pixel in the graphics object contains a value other than the color-key, the value is written to the composite or combined picture. For example, pixel 14 of the graphics object, having a value other than the color-key, is written to the corresponding pixel 16 in the picture in the overlay process, as indicated by arrow 18.

Overlaying a graphics object in accordance with the related art is done in 4:4:4 space; however, digital pictures are usually stored in a reduced format 4:2:2 or 4:2:0 space. Thus, before an overlay operation may take place, the digital picture must be converted from the 4:2:2 or 4:2:0 space to the 4:4:4 space. After the overlaying process, the picture must be converted back to the desired compressed size format for coding or storage. While a desktop computer or bank of servers may have sufficient computer capacity to perform the conversion operations, smaller mobile devices, such as personal digital assistants and cellular telephones, may not.

SUMMARY OF SOME EMBODIMENTS OF THE INVENTION

The problems noted above are solved in large part by a method, and related system, for overlaying or combining a graphics object and a digital picture. In particular, some embodiments of the invention may comprise combining digital graphics object and a digital picture while both the digital graphics object and the digital picture are in a down-sampled or compressed format. Other embodiments of the invention may comprise a processor and a memory coupled to the processor. The processor, executing a program, overlays a digital graphics object and a digital picture while each of the digital graphics object and the digital picture are in compressed format.

Other exemplary embodiments may be a method comprising compressing an uncompressed graphics object to create a compressed graphics object, then replacing a pixel luminance value of a compressed digital picture with a pixel luminance value of the compressed graphics object, and modifying a chrominance value of the compressed digital picture based on a chrominance value of the compressed graphics object.

Yet other exemplary embodiments may comprise a computer readable media storing a program that, when executed by a processor, performs a method comprising overlaying a graphics object onto a picture while both the graphics object and the picture ar e in a compressed format. Yet further alternative embodiments may comprise a computer readable media storing a program that, when executed by a processor, performs a method comprising compressing a graphics object to create a compressed graphics object by combining a plurality of chrominance values into a single chrominance value, calculating a weight factor based on a number of luminance values (associated with the plurality of chrominance values) that indicate that the corresponding luminance values in a picture to be overlaid by the graphics object should remain unchanged, and storing the weight factor within the compressed graphics object.

Thus, the present invention comprises a combination of features and advantages which enable it to overcome various problems of prior devices. The various characteristics described above, as sell as other features, will be readily apparent to those skilled in the art upon reading the following detailed description of the preferred embodiments of the invention, and by referring to the accompanying drawings.

BRIEF DESCRIPTION OF THE DRAWINGS

For a more detailed description of embodiments of the present invention, reference will now be made to the accompanying drawings, wherein:

Figure 1 illustrates a 4:4:4 portion of a digital image;

Figure 2 illustrates a 4:2:0 portion of a digital image;

Figure 3 illustrates a 4:2:2 portion of a digital image;

Figure 4 illustrates overlaying a graphics object and a digital picture;

Figure 5 illustrates overlaying a graphics object and a digital image in 4:4:4 space;

Figure 6 illustrates a processor-based system in accordance with embodiments of the invention;

Figure 7 illustrates a flow diagram of a processor -based method in accordance with embodiments of the invention;

Figure 8A illustrates compressing of chrominance values in accordance with embodiments of the invention;

Figure 8B illustrates compressing of chrominance values in accordance with embodiments of the invention; and

Figure 9 illustrates overlaying of a graphics ob ject and a digital picture in accordance with embodiments of the invention.

NOTATION AND NOMENCLATURE

Certain terms are used throughout the following description and claims to refer to particular system components. As one skilled in the art will appreciate, computer companies may refer to a component by different names. This document does not intend to distinguish between components that differ in name but not function.

In the following discussion and in the claims, the terms "including" and "comprising" are used in an open-ended fashion, and thus should be interpreted to mean "including, but not limited to...". Also, the term "couple" or "couples" is intended to mean either an indirect or direct electrical or mechanical connection. Thus, if a first device couples to a second device, that connection may be through a direct connection, or through an indirect connection via other devices and connections.

DETAILED DESCRIPTION OF THE PREFERRED EMBODIMENTS

Figure 6 illustrates a processor-based system in accordance with embodiments of the invention. In particular, the processor -based system may comprise a central processing unit (CPU) 20. The CPU may take many forms depending upon the form of system 100. For example, if the system 100 is a personal computer or server, the CPU 20 may be a processor, such as processors manufactured by Intel® and/or AMD®. In other embodiments, less computing power may be needed, and thus the CPU may be implemented as a microcontroller.

The processor-based system 100 may further comprise a memory 22 coupled to the CPU, and other devices, by way of a system bus 24. In accordance with at least some embodiments of the invention, the memory may be a volatile or a non-volatile random access memory (RAM). The system 100 may further comprise a graphics driver 26 coupled to the system bus 24. The graphics driver may be responsible for receiving text and images in a digital format from the CPU and/or other components, and displaying the information on an attached display 28. The system 100 may further comprise an input/output (I/O) device (I/O DEV) 30 to allow a user of the system 100 to direct operation and supply information. The I/O device 30 may take many forms depending on the form of the system 100. For example, if the system 100 is a personal computer, the I/O device may be one or more of a keyboard and/or mouse. In some embodiments, the display 28 may be a "touch screen" display, and thus the I/O device 30 and the display 28 may be integral components. Regardless of the for m of the I/O device 30, the I/O device 30 may be coupled to the CPU 20, as well as other components, by way of an I/O interface (I/O INTF) 32.

The processor-based system 100 may further comprise, in some embodiments, a radio transceiver 34, and associated antenna 36, coupled to the CPU 20. Thus, system 100 may be a wireless device such as a personal digital assistant (PDA) capable of sending and receiving electronic data. In other embodiments, system 100 may comprise a digital signal processor 38, and corresponding speaker 40, and thus the system 100 may be a cellular telephone, or a device having a combination of functionalities including that of a PDA and cellular telephone. In accordance with at least some embodiments of the invention, the processor -based system 100 may be capable of receiving and modifying digital pictures, possibly by overlaying graphics objects on the pictures. The overlaying may be for a single digital picture, or for each picture in a stream of pictures representing video.

In addition to, or in place of, the components discussed above, the system 100 may further comprise a charge couple device (CCD) array 42 coupled to the CPU 20. Thus, in these embodiments the system 100 may be a digital camera, a video camera, or a cellular telephone with picture capture capability. The system 100 may thus be capable of acquiring pictures prior to their modification by graphics overlaying. In the portable embodiments, such as a PDA, cellular telephone, digital camera and video camera, the system 100 may also comprise a battery 44.

Overlaying a graphics object on a digital picture of the related art involves operations with each of graphics object and digital picture in the 4:4:4 graphics space. However, digital pictures are stored and transferred in a down-sampled or compressed format, such as 4:2:2 or 4:2:0 space. Thus, graphics overlaying of the related art requires converting the digital picture from its compressed 4:2:2 or 4:2:0 space into 4:4:4 space prior to overlaying the graphics obj ect, and then further requires compressing the modified digital picture from the 4:4:4 space back to a compressed format, such as 4:2:2 or 4:2:0. In accordance with embodiments of the present invention, the overlaying of the graphics object on the digital picture is performed with both the graphics object and the digital picture in the compressed format, eliminating the need for pre -overlay processing and post-overlay processing of the digital picture.

The graphics object which a user desires to overlay on a digital picture may be provided to the user in a compressed format, and thus the overlaying in the compressed format may be done without pre-processing of the graphics object. In alternative embodiments, the graphics may be provided uncompressed, and thus the graphics object may be down-sampled prior to the overlay procedure; however, the pre-processing of the graphics object may be completed well in advance of the actual overlay process, and at times when processor utilization is otherwise low.

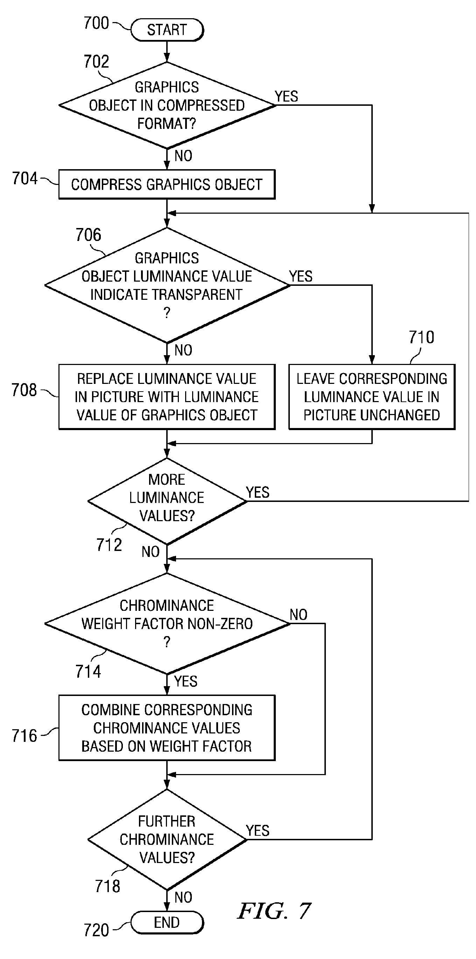

Figure 7 illustrates a flow diagram of the overall process of overlaying graphics objects on digital pictures in compressed space. In particular, the process may start (block 700) and proceed to a determination of whether the graphics object is in compressed format (block 702). If the graphics object is not in a compressed format, the process may move to compressing graphics object (block 704). The discussion now turns to down-sampling or compressing the graphics object in accordance with embodiments of the invention.

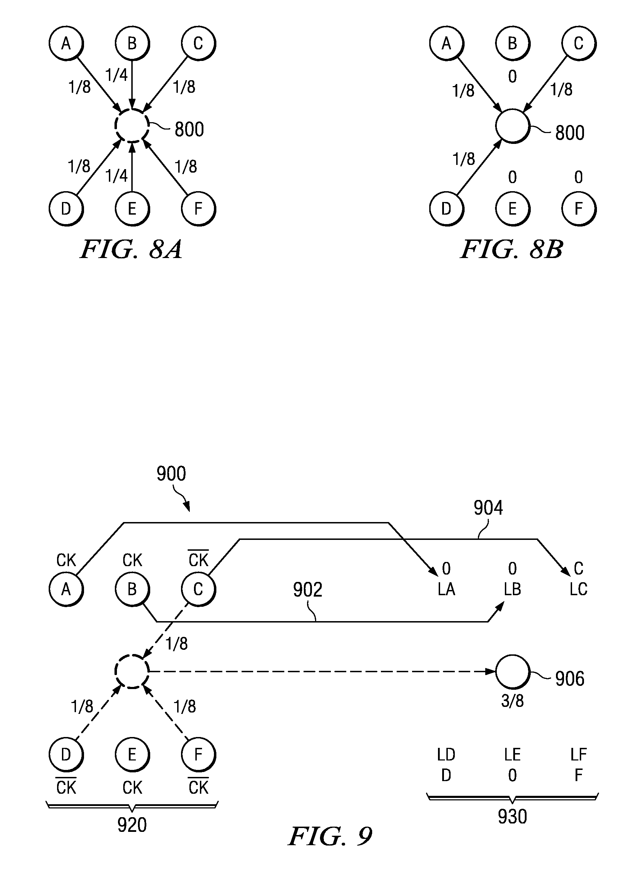

Figure 8A illustrates six pixels from a portion of a graphics object in 4:4:4 space (the luminance and chrominance values directly correspond). In particular, the letters A, B, C, D, E and F, and their corresponding circles, illustrate luminance and chrominance values in 4:4:4 space. In accordance with embodiments of the invention, the number of luminance values remains unchanged between compressed and uncompressed graphics objects and pictures; however, the number of chrominance values is reduced. Compressing the graphics object preferably involves generating combined or composite chrominance values, as illustrated by the dashed circle 800. In particular, Figure 8A illustrates that the combined chrominance value 800 may be made up of weighted contributions from the chrominance values of each of the surrounding pixels. Figure 8A also illustrates the relative weight of the surrounding chrominance values to create combined chrominance value 800 in accordance with at least some embodiments of the invention.

The illustration of Figure 8A assumes that it is desired that all the pixels A-F of the exemplary graphics object find their way into the picture, and thus all the pixels A-F contribute to the combined chrominance value 800. However, in the case where a particular pixel of the graphics object is not meant to replace a pixel in the picture, the calculation of the combined chrominance value 800 preferably does not include a contribution from that pixel. Figure 8B illustrates a situation where the pixel values B, E and F are not meant to replace the corresponding pixels in the picture (indicated by a "0" proximate to the pixel). In this case, the combined chrominance value 800 is comprised only of contributions from pixels A, C and D. Equation 1 below illustrates the calculation of the chrominance value in this exemplary case.

$$CHO = (1 \cdot 1/8 \cdot A) + (0 \cdot 1/4 \cdot B) + (1 \cdot 1/8 \cdot C) + (1 \cdot 1/8 \cdot D) + (0 \cdot 1/4 \cdot E) +$$

$$(1 \cdot 1/8 \cdot F) \tag{1}$$

Where CCHO is the down-sampled chrominance value (800) placed in the compressed graphics object.

In accordance with embodiments of the invention, a weight factor is defined for each down-sampled chrominance value, the weight factor playing a part in the blending of chrominance values of the compressed graphics overlay and the compressed digital picture. Using Figure 8B as an example, the weight factor may be defined as a summation of the relative contributions of each of the pixels from the 4:4:4 space (if any). Equations 2 and 3, reproduced immediately below, illustrate calculation of the weight factor W for the exemplary system of Figure 8B.

$$W = (1 \cdot 1/8) + (0 \cdot 1/4) + (1 \cdot 1/8) + (1 \cdot 1/8) + (0 \cdot 1/4) + (1 \cdot 1/8) \tag{2}$$

$$W = 3/8 \tag{3}$$

For the exemplary portion of the graphics overlay of Figure 8B, the pixel A contributes 1/8, pixel C contributes 1/8, and the pixel D contributes 1/8 for a total weight factor of 3/8 (Equation 3). In order that the weight factor may be found and used during combining of chrominance values, in at least some embodiments the weight factor is stored within the compressed graphics object. In some embodiments, the weight factors may be stored within the compressed graphics object, yet separate from the combined chrominance values. In alternative embodiments, the least significant bits of each combined chrominance value may be dedicated to storing the weight factor.

Figure 9 illustrates, in a graphical form, the down-sampling or conversion of a graphics object 920 in 4:4:4 space to a compressed graphics object 930, in this example in a 4:2:0 space. In particular, a pixel within the uncompressed graphic object 920 having the value of the color-key (CK) is indicative of a pixel that should not be written into the digital picture. Pixel A of Figure 9 illustrates a pixel having the value of the color key, and thus a transform of the luminance value from the uncompressed space to the compressed space (arrow 900) preferably involves writing a value for the luminance of the corresponding pixel (LA) in the compressed graphics object 930 that indicates transparency. In accordance with at least some embodiments, a luminance value of zero (as illustrated in Figure 9) indicates transparency, however any luminance value could be designated as the value indicating transparency. Likewise, arrow 902 illustrates pixel B in the uncompressed graphics object 920 that has the value of the color-key, and therefore the luminance of the corresponding pixel (LB) in the compressed graphics object indicates transparency. Pixel C, however, illustrates a pixel that is intended to be written into the digital picture, and thus comprises value other than the color-key (indicated by "$\overline{CK}$"). The luminance value of the pixel C is written to the luminance of the pixel (LC) of the compressed graphics object, as illustrated by arrow 904. The luminance of the uncompressed pixel values D and F, having values other than the color-key, are likewise transferred into the compressed graphics objects.

Figure 9 also illustrates calculation of a combined chrominance value, but with contributions only from pixels

whose chrominance values are other than the color -key. The chrominance value calculated, indicated by circle 906, is therefore a combination of the chrominance values of all pixels having values other than the color-key in the uncompressed graphics object 920. Figure 9 also illustrates holding a value indicating the weight factor as part of the chrominance values, in this particular example 3/8.

Returning again to Figure 7, once the graphics object has been compressed (if needed) (block 704), the next step in the process may be a determination of whether a luminance value of a pixel in a compressed graphics object indicates transparency (block 706). If a luminance value in the compressed graphics object indicates non-transparency (preferably a non -zero value), then the corresponding luminance value in the compressed picture is replaced with the luminance value from the graphics object (block 708). If the luminance value in a graphics object indicates transparency, then the corresponding luminance va lue in the digital picture remains unchanged (block 710). Regardless of whether the luminance value in the picture is replaced or remains unchanged, the next step in the process may be determining whether all the luminance values in a graphics object have been analyzed (block 712).

Still referring to Figure 7, in addition to converting the graphics object from an uncompressed to a compressed state (if needed) and transferring at least some of the luminance values from the compressed graphics object to the compressed digital picture, embodiments of the invention also selectively combine chrominance values in the compressed graphics object and compressed digital picture. In particular, if a weight factor of a chrominance value in the compressed graphics obj ect is non-zero (block 714), then the next step may be combining the chrominance value from the graphics object with the chrominance value of the picture based on the weight factor. The equation for combining the chrominance values based on the weight fac tor W may be:

$$CHR(W) = (1-W)\cdot CHP + (W)\cdot CHO \qquad (4)$$

where CHR is the combined chrominance value, CHP is the chrominance value from the digital picture, and CHO is the chrominance value from the graphic overlay. Equation 4 illustrates that as the weight factor changes, so too does the relative contribution from the graphics object and the digital picture. Using the exemplary weight factor of 3/8 from Equations 2 and 3 above, a combined chrominance value may therefore be calculated as:

$$CHR = (1-3/8)\cdot CHP + (3/8)\cdot CHO \qquad (5)$$

A weight factor of zero for a chrominance value may indicate that all of the luminance values to which the chrominance value is related indicate transparency, and thus the chrominance value in the digital picture remains unchanged.

Still referring to Figure 7, after combining the corresponding chrominance values based on the weight factor (block 716), the next step in the process may be a determination if any further chrominance values need to be combined (block 718). If no further chrominance values are left to combine, the process may end (block 720).

As discussed with respect to blocks 702 and 704 of Figure 7, embodiments of the invention may convert a uncompressed graphics object (*e.g.*, a graphics object in a 4:4:4 space) to a compressed graphics object (*e.g.*, a 4:2: 2 or 4:2:0 space) prior to overlaying. However, while Figure 7 shows these steps as integral with the remaining steps in the overlay process, converting the uncompressed graphics object to a compressed graphics object and calculation and insertion of the weight factor, may take place well before the overlay procedure. Moreover, the weight factor may be included within the compressed graphics object file (either as separate data values, or within the least significant bits of the chrominance value). In alternative embodiments, the compressed graphics object may not specifically contain the weight factor for each chrominance value, and in these embodiments the weight factor may be calculated contemporaneously with the combining of the chrominance values (block 716 of Figure 7).

Various embodiments of the invention also lend themselves well to alpha blending of the graphics object with the digital picture. In particular, and especially in relation to applying a graphics object to a series of pictures forming video, it may desirable to have the graphics object fade in or fade out of the picture. Alpha blending may be accomplished by application of an alpha ($\alpha$) value where $0 >= \alpha >= 1$ to be applied to both the luminance and the chrominance values. In some embodiments, the application of the alpha value may be done in a pre-processing method when the graphics overlay is converted from an uncompressed space to a compressed space. As for the luminance values, the luminance values in the compressed graphics object may be defined by Equation 6 below:

$$LC_k = \alpha\cdot LNC_k \qquad (6)$$

where $Lc_k$ represents a compressed luminance value, $L\ NC_k$ is a non-compressed luminance value, $\alpha$ is the alpha

value, and k = 1 ... m being the number of luminance values in the sample or graphics object. Further, with respect to the weight factor for each chrominance value, Equation 7 below defines the relationship.

$$W(\alpha)_k = \alpha \cdot W_k \tag{7}$$

where $W(\alpha)$ is the weight factor as a function of the alpha value, and W is the weight factor for each chrominance value without regard to the alpha value. Thus, in alpha value pre -processing, the alpha value is used during transformation of the non-compressed graphics object to the compressed graphics object. Overlaying of the compressed graphics object onto the compressed digital picture may take place as described above.

In embodiments implementing the real time alpha blending, the alpha value may be applied to the luminance value in the compressed graphics object just prior to its insertion into the digital picture. Likewise in the case of chrominance, when combining chrominance values with relative weights dictated by the weight factor, the weight factor too is multiplied by the alpha value prior to the combination.

While preferred embodiments of this invention have been shown and described, modifications thereof can be made by one skilled in the art without departing from the spirit or teachin g of this invention. The embodiments described herein are exemplary only and are not limiting. Many variations and modifications of the system and apparatus are possible and are within the scope of the invention. Accordingly, the scope of protection is not limited to the embodiments described herein, but is only limited by the claims which follow, the scope of which shall include all equivalents of the subject matter of the claims.

**Claims**

1. A processor-based method comprising combining a digital graphics object and a digital picture while both the digital graphics object and the digital picture are in a compressed format.

2. The processor-based method as defined in claim 1 further comprising, prior to combining, compressing the digital graphics object to be in the compressed format.

3. The processor-based method as defined in either claim 1 or claim 2 wherein combining further comprises combining a chrominance value in the digital graphics object with a chrominance value in the digital picture based on a weight factor, the weight factor proportional to a number of luminance values in the digital graphics object having values indicating transparency.

4. The processor-based method as defined in claim 3, dependent on claim 2, further comprising:

   calculating the weight factor during compressing; and
   storing the weight factor within the digital graphics object.

5. The processor-based method as defined in claim 4 further comprising storing the weight factor in the least significant bits of the chrominance value.

6. The processor-based method as defined in any of claims 2 - 5 further comprising compressing the digital graphics object in 4:4:4 space to one of 4:2:2 space or 4:2:0 space.

7. A system comprising:

   a processor;
   a memory coupled to the processor; and

   wherein the processor, executing a program, overlays a digital graphics object and a digital picture while each of the digital graphics object and the digital picture are in compressed format.

8. The system as defined in claim 7 further comprising a charge coupled device (CCD) array coupled to the processor, and wherein the processor, executing a program, acquires the digital picture using the CCD array.

9. The system as defined in either claim 7 or claim 8 further comprising a radio transceiver coupled to the processor, and wherein the processor, executing a program, receives at least one of the digital graphics object or the digital picture through the wireless transceiver.

10. The system as defined in any of claims 7 - 9 further comprising a radio transceiver coupled to the processor, and wherein the processor, executing a program, transmits the digital picture created by the overlaying of the digital graphics object and the digital picture using the transceiver.

11. The system as defined in any of claims 7 - 10 wherein the processor, executing the program, overlays the digital graphics object and the digital picture while each of the digital graphics object and the digital picture are in one of a 4:0:0, 4:2:2 or 4:2:0 space format.

12. A method comprising:

compressing an uncompressed graphics object to create a compressed graphics object; then
replacing a pixel luminance value of a compressed digital picture with a pixel luminance value of the compressed graphics object; and
modifying a chrominance value of the compressed digital picture based on a chrominance value of the compressed graphics object.

13. The method as defined in claim 12 wherein modifying the chrominance value of the compressed digital picture further comprises blending the chrominance value of the compressed digital picture with the chrominance value of the compressed graphics object based on a weight factor.

14. The method as defined in claim 13 further comprising blending using substantially the following equation:

$$CHR(W) = (1-W) \, CHP + (W)CHO$$

where W is the weight factor, CHR(W) is the resulting chrominance value after blending, CHP is the chrominance value from the digital picture, and CHO is the chrominance value from the graphic overlay.

15. The method as defined in claim 13 further comprising blending based on the weight factor, a value of the weight factor based on a number of pixel luminance values indicating transparency close to the chrominance value of the graphic overlay.

16. A computer readable media storing a program that, when executed by a processor, performs a method comprising overlaying a graphics object onto a picture while both the graphics object and the picture are in a compressed format.

17. The computer readable media storing as defined in claim 16, wherein the program, when executed by a processor, performs a method comprising:

compressing a graphics object to create a compressed graphics object by combining a plurality of chrominance values into a single chrominance value;
calculating a weight factor based on a number luminance values, associated with the plurality of chrominance values, that indicate that the corresponding luminance values in a picture to be overlaid by the graphics object should remain unchanged; and
storing the weight factor within the compressed graphics object.

**FIG. 1**
*(PRIOR ART)*

**FIG. 2**
*(PRIOR ART)*

**FIG. 3**
*(PRIOR ART)*

**FIG. 5**
*(PRIOR ART)*

**FIG. 4**
*(PRIOR ART)*

**FIG. 6**

700 — START

702 — GRAPHICS OBJECT IN COMPRESSED FORMAT? —— YES

NO

704 — COMPRESS GRAPHICS OBJECT

706 — GRAPHICS OBJECT LUMINANCE VALUE INDICATE TRANSPARENT ? —— YES

NO

708 — REPLACE LUMINANCE VALUE IN PICTURE WITH LUMINANCE VALUE OF GRAPHICS OBJECT

710 — LEAVE CORRESPONDING LUMINANCE VALUE IN PICTURE UNCHANGED

MORE LUMINANCE VALUES? —— YES

712 — NO

CHROMINANCE WEIGHT FACTOR NON-ZERO ? —— NO

714 — YES

716 — COMBINE CORRESPONDING CHROMINANCE VALUES BASED ON WEIGHT FACTOR

FURTHER CHROMINANCE VALUES? —— YES

718 — NO

720 — END

*FIG. 7*

**FIG. 8A**

**FIG. 8B**

**FIG. 9**